# EUROPEAN PATENT APPLICATION

(11) **EP 1 074 982 A1**
(43) Date of publication of application: **07.02.2001**
(21) Application number: 99113462.8
(22) Date of filing: 13.07.1999
(51) Int. Cl.: G11B 7/09, G11B 7/085, G11B 7/095, G11B 7/08

(54) **Actuator with bi-axial lens tilt adjustment**

(71) Applicant: DEUTSCHE THOMSON-BRANDT GMBH, 78048 Villingen-Schwenningen (DE)
(72) Inventor: Kaaden, Jürgen, Thomson multimedia Licensing & IP, 92648 Boulogne Billancourt (FR); Oldermann, Klaus, Thomson multimedia Licensing & I, 92648 Boulogne Billancourt (FR); Storz, Martin, Thomson multimedia Licensing & IP, 92648 Boulogne Billancourt (FR)
(74) Representative: Ruellan-Lemonnier, Brigitte

(57) **Abstract**

In a lens actuator for use in an optical disc drive, means for tilting allow to adjust an orientation of the tilt in either one of a radial and tangential direction independently. The means for tilting the lens comprise a first and a second concave surface which each may for example be a part of a cylindrical surface. The first concave surface allows to tilt the actuator base plate in radial direction, the second allows to tilt the suspension holder in tangential direction.

## Description

The invention relates to actuators used in optical disc players and/or recorders, and more precisely to means for tilting a lens in such an actuator.

Optical disc players and/or recorders typically use an optical pickup to read and/or write on a disc by means of a light beam. The pickup comprises optical means for directing and focusing the light beam. More precisely the light beam is focused on the disc surface using a lens. The lens is mounted on a lens carrier which may be moved towards, away and parallel to the disc surface in order to precisely position the focused light beam spot on the disc. The positioning towards, away and parallel to the disc surface is done using an actuator buildup. Typically the actuator comprises an actuator base plate, a suspension holder mounted on the actuator base plate, a suspension means for elastically mounting the lens carrier to the suspension holder while the lens carrier remains free of contact with the actuator base plate in order to move freely. The actuator may further comprise a magnetic system involving permanent magnets, electromagnets, magnet holders, and return closing for guiding magnetic fields in order to apply appropriate forces to move and position the lens carrier.

The lens has an optical axis which needs to be precisely oriented in order to obtain a proper focusing of the light beam. The orientation of the optical axis may be adjusted by directly or indirectly tilting the lens. This is typically done once during manufacturing of the pickup and perhaps a few times during the lifetime of the pickup if required. It is for example possible to adjust an orientation of the actuator base plate relative to an optics body which carries the actuator base plate. In this case, the actuator base plate is provided with embossed parts which are fitted and moved inside pregrooved holes on the optics body until the desired orientation of the actuator base plate is achieved. The orientation of the actuator base plate is relatively difficult to adjust partly because of sticking effects of the embossed parts in the pregrooved holes. References for orienting the actuator base plate may be relative to a disc track to read and/or record, i.e., to a radial and a tangential direction. Any orientation adjustment of the actuator base plate which is intended to orient the optical axis in radial direction is likely to affect the orientation of the optical axis in tangential direction and vice-versa. This makes it difficult to precisely adjust radial and tangential orientation independently.

It is an object of the invention to overcome the problem of imprecise adjustment caused by sticking effects.

It is another object of the invention to solve the problem caused by the interdependency of radial and tangential adjustments.

According to the invention an actuator for use in an optical disc drive pickup comprises
- an actuator base plate,
- a lens carrier,
- a suspension holder mounted on the actuator base plate,
- a suspension means for elastically mounting the lens carrier to the suspension holder, the lens carrier being free of contact with the actuator base plate,
- a lens mounted on the lens carrier and having an optical axis, and
- means for tilting the lens such to adjust an orientation in either one of two distinct radial and tangential directions;

The means for tilting comprise
- a first concave surface defined by a set of straight lines which are parallel to a first direction axis and perpendicularly intersect a first curved line, the first direction axis being perpendicular to one of the radial or tangential directions, a rolling about the first concave surface allowing a tilt of the lens in the one direction,
- a second concave surface defined by a set of straight lines which are parallel to a second direction axis and perpendicularly intersect a second curved line, the second direction being perpendicular to an other of the radial or tangential directions, a rolling about the second concave surface allowing a tilt of the lens in the other direction.

Advantageously the actuator according to the invention allows a tilting of the lens without sticking effects. Also this actuator allows an independent adjustment of the tilt in either one of the radial and tangential directions.

The invention will in the following be explained using examples and drawings, wherein
- Fig.1 shows a simplified actuator according to the invention including indications on one tilting direction,
- Fig.2 shows a simplified actuator according to the invention including indication on another tilting direction,
- Fig.3 shows a preferred embodiment of an actuator according to the invention,
- Fig.4 Shows a preferred embodiment of an actuator base plate according to the invention,
- Fig.5 Shows a preferred embodiment of a suspension holder according to the invention.

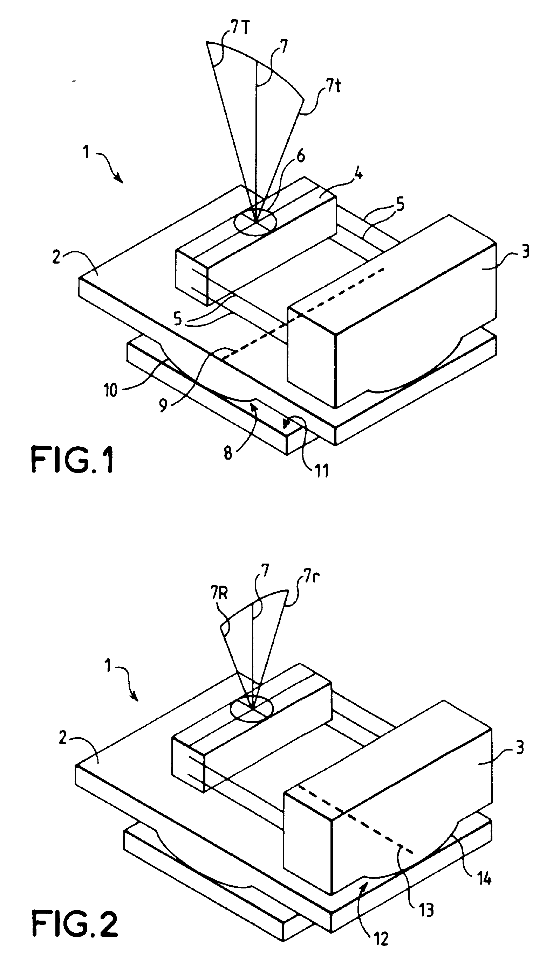

Fig.1 shows an example of an actuator 1. For reasons of better readability many parts of the actuator 1 have not been represented, e.g. magnet holders, magnets, coils and others. An actuator base plate 2 carries a suspension holder 3 which is used to mount a lens carrier 4 using elastical suspension means 5. The lens carrier 4 is mounted such that it may move free of contact with the actuator base plate 2, more precisely it may be moved away, towards or parallel to the actuator base plate 2. A lens 6 is mounted on the lens carrier 4. Typically the lens 6 is an objective lens which allows to focus a light beam at a determined distance from the lens. The lens 6 has an optical axis 7 represented using a straight line. The actuator further comprises means for tilting realized using two distinct concave surfaces.

A first concave surface 8 is located under the actuator base plate 2, i.e., not visible in Fig 1. It is defined by a set of straight lines (not shown) which are parallel to a first direction axis 9 represented in a dotted line, and which perpendicularly intersect a first curved line 10. In case the actuator base plate is tilted, i.e., a rolling about the first concave surface 8 is done, the lens 6 is tilted in a direction perpendicular to the first direction axis 9. This results in a reorientation of the optical axis 7 in a tangential direction, for example to directions 7T and 7t.

The first curved line 10 may for example be an arc of a circle, which makes the first concave surface 8 to a part of a cylindrical surface.

The first concave surface 8 may roll on a surface 11 which is for example part of an optics body (not shown) carrying the actuator 1. In Fig. 2 which shows the same actuator 1 as in Fig. 1, a second concave surface 12 is located under the suspension holder 3, i.e., not visible in Fig. 2. The second concave surface 12 is defined by a set of straight lines (not shown) which are parallel to a second direction axis 13 represented using a dotted line. The straight lines perpendicularly intersect a second curved line 14. In case the suspension holder 3 is tilted, i.e., a rolling about the second concave surface 12 is done, the lens 6 is tilted in a direction perpendicular to the second direction axis 13. The second concave surface 12 may for example lie on the actuator base plate 2 and the tilting of the lens 6 be relative to the actuator base plate 2. This results in a reorientation of the optical axis 7 in a radial direction, for example to directions 7R and 7r.

The second curved line 14 may for example be an arc of a circle, which makes the second concave surface 12 to a part of a cylindrical surface.

Advantageously, the first and second curved lines 10 and 14 are arcs of circle which each have their center on a distinct axis which lies on a straight line passing through the lens 6 and being perpendicular to the optical axis 7.

Hence using the first and second concave surfaces 8 and 12 as shown in Figs. 1 and 2 it is possible to achieve a tilt in either radial or tangential direction, each direction being independently adjustable without affecting the other. The rolling over either the first or second concave surface is done smoothly, i.e., without sticking effects known from prior art.

In a preferred embodiment either one or both first and second concave surfaces 8 and 12 roll on a plane surface, e.g. or surface 11 of an optics body or a surface of the actuator base plate.

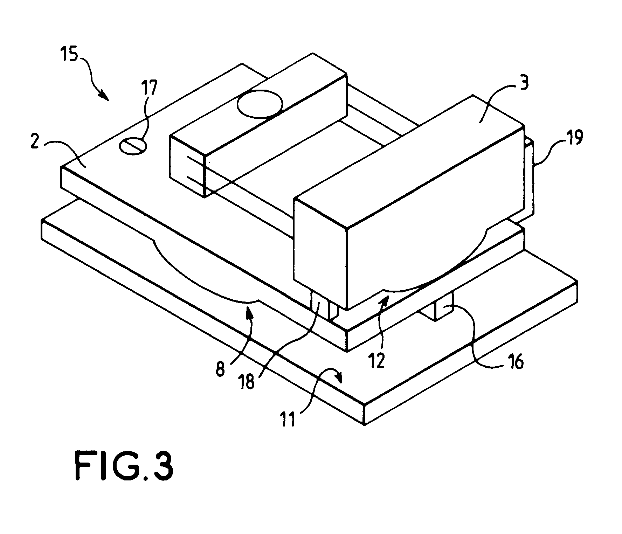

Fig. 3 shows an actuator 15 which has first and second concave surfaces 8 and 12 as shown in Figs 1 and 2. First means for adjusting and fixing the orientation of the actuator base plate 2 comprise spring means 16 which produce a force on the actuator base plate 2 by acting on a point of attachment of the spring means 16 to the actuator base plate 2, the force being directed towards the surface of the optic body 11. The first mean for adjusting and fixing further comprise screw means 17 which allow to precisely adjust a tilt of the actuator base plate 2 relative to the surface of the optics body 11. Hence an easy and precise adjustment in tangential direction may be achieved at manufacturing but also later at servicing of the actuator.

Fig. 3 further schematically shows second means for adjusting and fixing the orientation of the suspension holder 3 relative to the actuator base plate 2 which comprise spring means 17 producing a force which acts on a point of attachment of the spring means 18 to the suspension holder 3 and is directed towards the actuator base plate 2. The second means for adjusting and fixing further comprise means 19 which allow to precisely adjust a tilt of the suspension holder 3 relative to the actuator base plate 2. Hence an easy and precise adjustment in radial direction may be achieved at manufacturing but also later at servicing of the actuator.

In another preferred embodiment (not represented) the first and/or second concave surfaces 8 and 12 are fitted in a recess which has a counter part convex type surface to receive the concave shaped surface. A mold for the second concave surface 12 would for example be located on the actuator base plate 2, and a mold for the first concave surface 8 would for example be located on an optics body. This allows to more precisely position the suspension holder 3 relative to the actuator base plate 2, and/or the actuator base plate 2 relative to the surface 11.

Fig.4 shows an isometric top view of a preferred embodiment of an actuator base plate 20 which has the first concave surface 8 and a further first concave surface 8 (located under the actuator base plate 20 in this Fig.4), the latter being defined by the same set of straight lines as the former. Two U-shaped magnet holders 21 and 22 are mounted to the actuator base plate 20. The magnet holder 22 comprises on one extremity of its U-shaped body a recess 23 which forms a convex rolling surface.

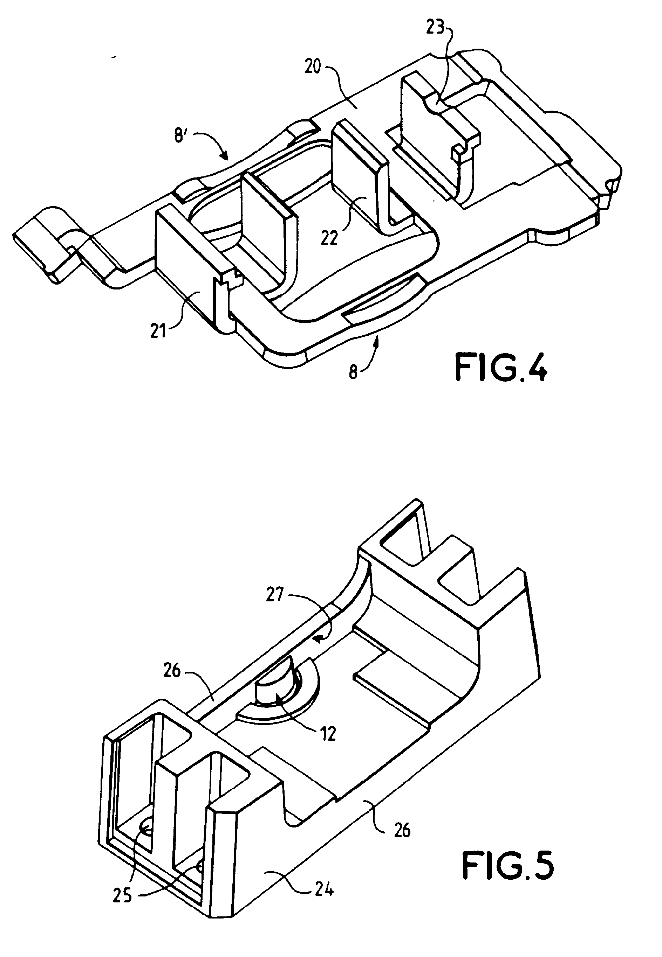

Fig.5 shows an isometric view of a suspension holder 24 which has opening 25 for fixing suspension means (not shown) similar to the suspension means 5 shown in Fig.1. A frame 26 carries on an inner side 27 of the frame the second concave surface 12. In case the suspension holder 24 is assembled with the actuator base plate 20 shown in Fig.4, the second concave surface 12 is fitted in the recess 23 of the magnet holder 22, the surface of the recess 23 being a counter part convex surface to the second concave surface 12. Hence, the second concave surface may roll inside the recess 23 and the suspension holder 24 tilted relative to the actuator base plate 20.

### LIST OF REFERENCES

- 1: Actuator
- 2: Actuator base plate
- 3: Suspension holder
- 4: Lens carrier
- 5: Suspension means
- 6: Lens
- 7: Optical axis
- 7R: Radial direction
- 7r: Radial direction
- 7T: Tangential direction
- 7t: Tangential direction
- 8: First concave surface
- 8': Further first concave surface
- 9: First direction axis
- 10: First curved line
- 11: Surface of optics body
- 12: Second concave surface
- 13: Second direction axis
- 14: Second curved line
- 15: Actuator
- 16: Spring means
- 17: Screw means
- 18: Spring means
- 19: Screw means
- 20: Actuator base plate
- 21: Magnet holder
- 22: Magnet holder
- 23: Recess
- 24: Suspension holder
- 25: Openings
- 26: Frame
- 27: Inner side

## Claims

1. An actuator for use in an optical disc drive pickup comprising
• an actuator base plate (2),
• a lens carrier (4),
• a suspension holder (3) mounted on the actuator base plate,
• a suspension means (5) for elastically mounting the lens carrier to the suspension holder, the lens carrier being free of contact with the actuator base plate,
• a lens (6) mounted on the lens carrier and having an optical axis,
• means for tilting the lens such to adjust an orientation in either one of two distinct radial and tangential directions wherein the means for tilting comprise
- a first concave surface (8) defined by a set of straight lines which are parallel to a first direction axis (9) and perpendicularly intersect a first curved line (10), the first direction axis being perpendicular to one of the radial or tangential directions, a rolling about the first concave surface allowing a tilt of the lens in the one direction,
- a second concave surface (12) defined by a set of straight lines which are parallel to a second direction axis (13) and perpendicularly intersect a second curved line (14), the second direction being perpendicular to an other of the radial or tangential directions, a rolling about the second concave surface allowing a tilt of the lens in the other direction.

2. An actuator according to claim 1, wherein
- the first concave surface is part of the actuator base plate such that the rolling about the first concave surface modifies an orientation of the actuator base plate and causes the lens to tilt in the one direction, and
- the second concave surface is part of the suspension holder such that the second concave surface may roll relative to the actuator base plate, such that the rolling about the second concave surface modifies an orientation of the suspension holder and causes the lens to tilt in the other direction.

3. An actuator according to claim 2, further comprising
• first means for adjusting and fixing (16, 17) the orientation of the actuator base plate, and
• second means for adjusting and fixing (18, 19) the orientation of the suspension holder relative to the actuator base plate.

4. An actuator according to anyone of claims 2 or 3, wherein
• The actuator base plate provides a recess (23) forming a counter part convex surface such to receive the second concave surface, the second concave surface rolling inside the recess.

5. Optical disk player and/or recorder characterized in that it comprises an actuator according to anyone of claims 1 to 4.
